# EUROPÄISCHE PATENTSCHRIFT

(11) **EP 2 526 559 B1**
(45) Veröffentlichungstag und Bekanntmachung des Hinweises auf die Patenterteilung: **30.03.2016**
(21) Anmeldenummer: 11701372.2
(22) Anmeldetag: 17.01.2011
(51) Int. Cl.: H01H 31/00

(54) **METALLGEKAPSELTER, GASISOLIERTER KOMBINIERTER TRENN- UND ERDUNGSSCHALTER**
METAL-ENCAPSULATED, GAS-INSULATED COMBINED DISCONNECTING AND GROUNDING SWITCH
INTERRUPTEUR D'ISOLEMENT ET DE MISE À LA TERRE COMBINÉ SOUS ENVELOPPE MÉTALLIQUE, ISOLÉ AU GAZ

(30) Priorität: 18.01.2010 DE 102010004981
(43) Veröffentlichungstag der Anmeldung: 28.11.2012
(73) Patentinhaber: ABB Technology AG, 8050 Zürich (CH)
(72) Erfinder: KUHL, Daniel, 60386 Frankfurt (DE); MANN, Michael, 63755 Alzenau (DE); SAXL, David, CH-8046 Zürich (CH)
(74) Vertreter: Kock, Ina
(86) Internationale Anmeldenummer: PCT/EP2011/050554
(87) Internationale Veröffentlichungsnummer: WO 2011/086188

(56) Entgegenhaltungen:
- EP-A1- 2 254 135
- WO-A1-2005/050685
- DE-A1- 3 802 394
- JP-A- 2000 134 733
- US-A- 3 665 135

## Beschreibung

Die Erfindung betrifft einen metallgekapselten, gasisolierten, in einem Gehäuse untergebrachten kombinierten mehrphasigen, insbesondere dreiphasigen, Trenn- und Erdungsschalter nach dem Oberbegriff des Anspruches 1.

Ein derartiger kombinierter Trenn- und Erdungsschalter für eine metallgekapselte, gasisolierte Hochspannungsschaltanlage ist aus der EP 0 824 264 B1 bekannt geworden. Der Kontaktbolzen für jede Phase ist in einem Gehäuseelement verschiebbar gelagert, wobei die Bewegungslinien der Kontaktbolzen parallel verlaufen. Der Antrieb des Kontaktbolzens erfolgt über eine Antriebsspindel, die als Zahnritzelstange ausgebildet ist und mit einem Zahnstangenabschnitt auf den Kontaktbolzen kämmt. Die Bewegungslinien der Kontaktbolzen verlaufen unter einem Winkel von ca. 40° bezogen auf die Verbindungsleiter zwischen zwei Flanschen.

Aus der DE 24 14 200 A1 ist eine metallgekapselte Schaltanlage bekannt geworden, bei der ein Kontaktbolzen innerhalb eines Trägergehäuses hin- und her bewegbar ist, wobei der Kontaktbolzen in einer Stellung mit einem Aktivteil und in einer zweiten Stellung mit einem Erdungskontakt in Verbindung gelangt. Der Antrieb des Kontaktbolzens erfolgt über eine parallel zum Kontaktbolzen verlaufende, drehbare, ein Außengewinde aufweisende Spindel. Am Kontaktbolzen ist senkrecht dazu ein ein Durchgangsloch mit einem Innengewinde umfassender Arm angebracht, der von der drehbaren Spindel durchgegriffen ist, wobei die Gewindestange vom einem Isolator, der mit ihr fluchtet, angetrieben oder über Kegelzahnradgetriebe von der Längsseite des kombinierten Trenn- und Erdungsschalters in Drehung versetzt wird. Diese Schaltanlage ist eine einphasig gekapselte Schaltanlage.

Eine ähnliche Konstruktion ist auch aus der US 3 665 135 bekannt geworden.

Die EP 0 678 952 A1 beschreibt einen kombinierten Trennschalter und Erdungsschalter, die beide allerdings getrennt voneinander betätigt werden.

Einen Schalter, in dem das Umlenkgetriebe in dem Trägerteil für den Kontaktbolzen untergebracht ist, wird in der JP-A-2000134733 offenbart.

Aufgabe der Erfindung ist es, einen kombinierten Trenn- und Erdungsschalter der eingangs genannten Art zu schaffen, bei dem die Baugröße verringert und die Betätigung der Kontaktbolzen vereinfacht ist.

Diese Aufgabe wird erfindungsgemäß durch die Merkmale des Anspruches 1 gelöst. Erfindungsgemäß also befinden sich die Bewegungslinien der Schubkontaktbolzen in einer Ebene, wobei die Schubkontaktbolzen von je einer mit ihren Bewegungslinien fluchtenden Isolierspindel antreibbar sind; dabei liegt die Antriebsspindel in der Ebene der Bewegungslinien und ist mit den Isolierspindeln über je ein Umlenkgetriebe gekoppelt, wobei die Umlenkgetriebe für den Antrieb jedes Kontaktbolzens in den Erdungskontaktstücken untergebracht sind.

Das Umlenkgetriebe ist in vorteilhafter Ausgestaltung ein Kegelradgetriebe, dessen Kegelräder im jeweiligen Erdungskontaktstück untergebracht und gelagert sind.

Eine vorteilhafte Ausgestaltung der Erfindung ist dadurch gekennzeichnet, dass die Isolierspindel jeweils ein Außengewinde aufweisen, das in ein Innengewinde je eines Kontaktbolzens eingreift, wobei jeder Kontaktbolzen an einer Drehung gehindert ist, so dass bei Drehung der Isolierspindel die Kontaktbolzen in die eine oder andere Richtung verschoben werden.

Die Übersetzung am Umlenkgetriebe ist eine 1 zu 1 - Übersetzung, so dass bei Drehung der Antriebsspindel sich auch die Isolierspindel in gleicher Weise dreht. Aus der Beobachtung der Antriebsspindel kann direkt mit dem Maßstab 1 zu 1 auf die Bewegung der Isolierspindel geschlossen werden. Wenn zusätzlich noch der Antriebsbereich vor der Antriebsspindel mit einbezogen wird, wo sich in gleicher Weise die Übersetzung von 1 zu 1 findet, kann von der Bewegung des Ausgangspunktes, z.B. eines Antriebsmotors, direkt auf die Bewegung der Isolierspindel geschlossen werden.

Dies erlaubt eine geeignete Positionierung von Hilfsschaltern und sonstigen Baugruppen auf der Antriebsseite und können daher einfach zur Indikation der Situation auf der Abtriebsseite, also der Isolierspindel und damit dem Kontaktbolzen verwendet werden.

Weitere vorteilhafte Ausgestaltungen und Verbesserungen der Erfindung sowie weitere Vorteile sind den weiteren Unteransprüchen zu entnehmen.

Anhand der Zeichnung, in der ein Ausführungsbeispiel der Erfindung schematisch dargestellt ist, sollen die Erfindung sowie weitere vorteilhafte Ausgestaltungen und Verbesserungen der Erfindung und weitere Vorteile näher erläutert und beschrieben werden.

Es zeigen:
- Fig. 1: eine Schnittansicht durch einen kombinierten Trenn- und Erdungsschalter, und
- Fig. 2: eine Längsschnittansicht durch den kombinierten Trenn- und Erdungsschalter gemäß Fig. 1.

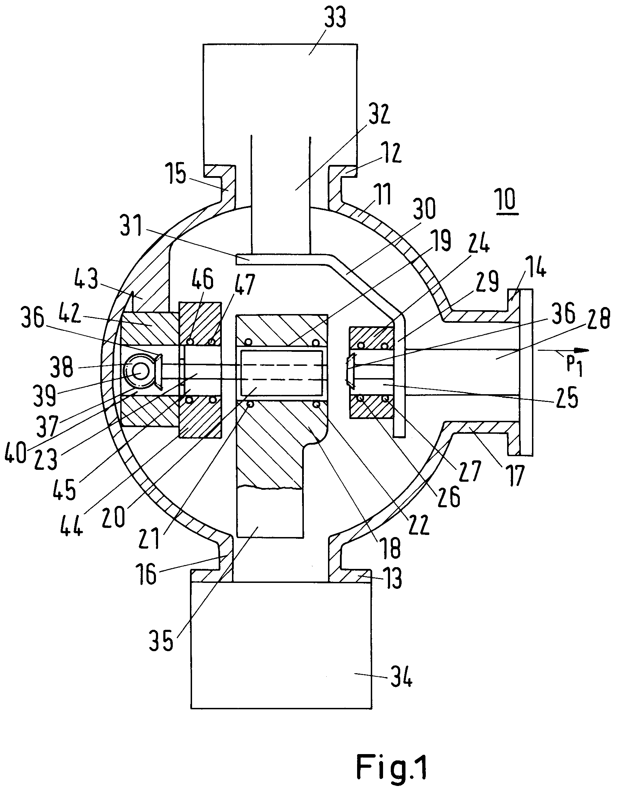

Es sei nun Bezug genommen auf die Fig. 1.

Der in der Fig. 1 gezeigte kombinierte metallgekapselte, dreiphasige Trenn- und Erdungsschalter 10, im folgenden auch Trenn-Erder genannt, besitzt ein zylinderartiges Gehäuse 11, an dem sich dystal gegenüberliegend je ein Flansch 12 und 13 angeformt ist, deren Flanschebenen parallel zueinander verlaufen.

Senkrecht zu den Flanschebenen verläuft die Flanschebene eines dritten Flansches 14, wobei die Flansche 12, 13 und 14 jeweils an Stutzen 15, 16 und 17 angeformt sind.

Im Inneren des Gehäuses 11 befindet sich ein erstes Aktivteil 18, in dem eine Durchgangsbohrung 19 eingebracht ist, deren Mittelachse parallel zu den Flanschebenen 12 und 13 verläuft und etwa mit der Mittelachse des Stutzens 17 beziehungsweise des Flansches 14 fluchtet. Innerhalb der Durchgangsbohrung 19 befindet sich ein Kontaktbolzen 20, der als Schubkontaktbolzen, kurz auch Kontaktbolzen genannt, ausgebildet ist und mit dem Aktivteil 18, das auch als Trägerteil für den Kontaktbolzen 20 bezeichnet werden kann, über Gleitkontaktelemente 21 und 22 elektrisch leitend verbunden ist. Der Schubkontaktbolzen 20 ist durch geeignete Mittel, zum Beispiel durch seitliche, längs verlaufende Abflachungen oder auch durch eine Nut- Feder- Anordnung, daran gehindert, sich zu drehen; er bewegt sich nur linear entlang seiner Bewegungslinie, die auch die Mittellängsachsen des Kontaktbolzens 20 ist.

An der dem Flansch 14 entgegengesetzt liegenden Stirnfläche des Kontaktbolzens 20 schließt eine Isolierspindel 23 an, die mit dem Kontaktbolzen 20 verbunden ist, wobei die Isolierspindel 23 ein Außengewinde trägt, das mit einem Innengewinde (nicht dargestellt) innerhalb des Kontaktbolzens 20 kämmt. Innerhalb des Gehäuses 11 befindet sich ein zweites Aktivteil 24, welches eine Innenbohrung 25 aufweist, an deren Innenfläche den Kontaktelementen 21 und 22 entsprechende Kontaktelemente 26 und 27 angeordnet sind. Die Mittelachse der Innenbohrung 25 fluchtet mit der Mittelachse des Kontaktbolzens 20 und mit der Mittelachse der Isolierspindel 23. Das Aktivteil 24 ist an einem Leiterteilstück 28 angeschlossen, welches gemäß Pfeilrichtung P₁ einen Strompfad zum Beispiel zu einem Abgangsbaustein bildet. Zwischen dem Aktivteil 24 und dem Leiterteilstück 28 befindet sich ein Schenkel 29 eines L-förmigen Verbindungsleiters 30, dessen anderer Schenkel senkrecht zum ersten Schenkel 29 verläuft und parallel zur Flanschebene des Flansches 12 und parallel zu der Ebene, in der die Bewegungslinien der Kontaktbolzen liegen. Der Schenkel 31 schließt an einem Leiterteilstück 32 an, welches beispielsweise mit einem Wandlerbaustein 33 verbunden ist, der auf dem Flansch 12 befestigt ist.

An dem Flansch 13 ist beispielsweise ein weiterer Wandlerbaustein 34 befestigt, der über ein Verlängerungsteil 35 mit dem Träger beziehungsweise ersten Aktivteil 18 verbunden ist.

Am dem Kontaktbolzen 20 entfernt liegenden Ende der Isolierspindel 23 ist ein erstes Kegelrad 36 eines Kegelradgetriebes 37 befestigt, welches mit einem zweiten Kegelrad 38 kämmt, das auf einer Antriebsspindel 39 befestigt ist, die in der Ebene liegt, in der die Bewegungslinien der Kontaktbolzen 20 liegen, wobei die Antriebsspindel 39 senkrecht zu den Isolierspindeln 23 und senkrecht zu der Mittelachse der Kontaktbolzen 20 verläuft.

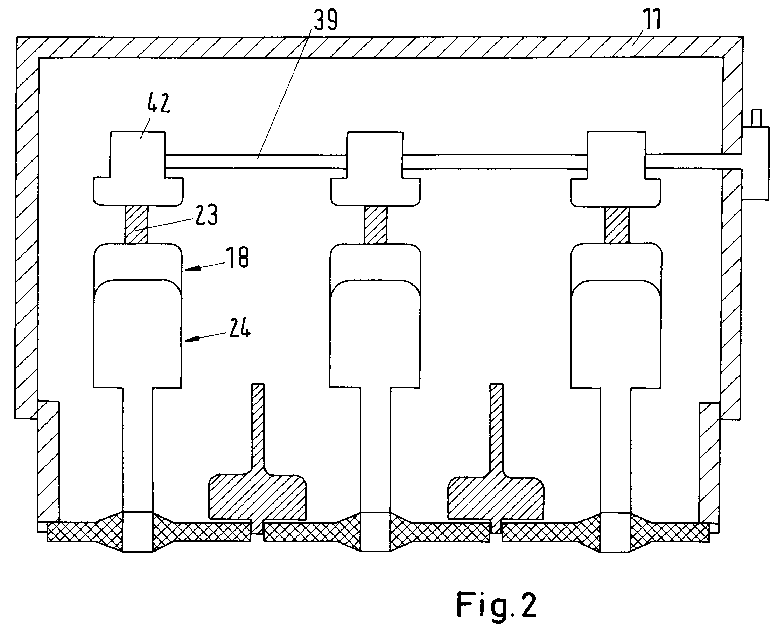

Die Fig. 2 zeigt eine Längsschnittansicht durch das Gehäuse gemäß Fig. 1 mit der Isolierspindel 23 für jede Phase. Aus der Fig. 2 ist ersichtlich, dass der Trenn-Erdungsschalter ein dreiphasiger Schalter ist. Er könnte auch als zweiphasiger Schalter ausgebildet sein, wobei selbstverständlich auch eine einphasige Ausgestaltung denkbar wäre. Die Anordnung der Kontaktbolzen 20 und der Isolierspindel 23 mit dem Erdungskontaktstück 42 in einer Ebene allerdings wäre nur sinnvoll bei einer zwei- oder dreiphasigen Ausführung.

Das Kegelradgetriebe ist im Innenraum 40 eines Erdungskontaktstückes 42 aufgenommen, welches Erdungskontaktstück 42 über einen Vorsprung 43 an der Innenseite des Gehäuses 11 befestigt ist. Das Erdungskontaktstück 40 besitzt ein Kontaktierungselement 44, welches eine Innenbohrung 45 aufweist, in der den Kontaktelementen 21, 22; 26, 27 entsprechende Kontaktelemente 46 und 47 untergebracht sind.

Der Kontaktbolzen 20 für jede Phase befindet sich innerhalb des ersten Aktivteils 18, wobei die Stirnflächen innerhalb der Stirnflächen des Aktivteils liegen oder sich befinden. Damit eine Kontaktierung des Kontaktbolzens mit dem zweiten Aktivteil 24 erfolgen kann, wird über einen Elektromotor 48 die Antriebsspindel 39 in Drehung versetzt, so dass über das Kegelradgetriebe 38 die Isolierspindel 23 in Drehung versetzt wird, so dass der Kontaktbolzen 20 bei einer Drehung in der einen Richtung in das zweite Aktivteil 24 hinein angetrieben wird und so den Abgang P₁ beispielsweise mit dem Stromwandler 34 verbindet.

In einer weiteren Betriebsweise wird bei entgegengesetzter Drehung der Antriebsspindel 39 der Kontaktbolzen 20 in die der Pfeilrichtung P₁ entgegengesetzte Richtung bewegt, so dass der Kontaktbolzen mit seiner in der Zeichnung links befindlichen Stirnfläche in die Innenbohrung 45 des Erdungskontaktstückes 42/43 eindringen kann, so dass auf diese Weise eine Erdung erfolgt.

Anstatt das Erdungskontaktstück 42 direkt an der Innenseite des Gehäuses zu befestigen, kann die Befestigung auch über eine Messanschlusseinrichtung erfolgen, die allerdings hier nicht gezeigt ist. Der kombinierte Trenn- und Erdungsschalter 10 ist in einer Ausgestaltung in einer Schaltanlage direkt am Leistungsschaltergehäuse angeflanscht.

**Bezugszeichenliste**

| | | | |
|---|---|---|---|
| 10 | Trenn- und Erdungsschalter | 37 | Kegelradgetriebe |
| 11 | zylinderartiges Gehäuse | 38 | zweites Kegelrad |
| 12 | erster Flansch | 39 | Antriebsspindel |
| 13 | zweiter Flansch | 40 | Innenraum |
| 14 | dritter Flansch | 42 | Erdungskontaktstück |
| 15 | Stutzen | 43 | Vorsprung |
| 16 | Stutzen | 44 | Kontaktierungselement |
| 17 | Stutzen | 45 | Innenbohrung |
| 18 | erstes Aktivteil | 46 | Kontaktelemente |
| 19 | Durchgangsbohrung | 47 | Kontaktelemente |
| 20 | Kontaktbolzen, Schubkontaktbolzen | 48 | Elektromotor |
| 21 | Kontaktelemente | | |
| 22 | Kontaktelemente | | |
| 23 | Isolierspindel | | |
| 24 | zweites Aktivteil | | |
| 25 | Innenbohrung | | |
| 26 | Kontaktelemente | | |
| 27 | Kontaktelemente | | |
| 28 | Leiterteilstück | | |
| 29 | Schenkel | | |
| 30 | L-förmiger Verbindungsleiter | | |
| 31 | Schenkel | | |
| 32 | Leiterteilstück | | |
| 33 | Spannungswandler | | |
| 34 | Stromwandler | | |
| 35 | Verlängerungsteil | | |
| 36 | erstes Kegelrad | | |

## Patentansprüche

1. Metallgekapselter, gasisolierter, in einem Gehäuse untergebrachter kombinierter mehrphasiger, vorzugsweise dreiphasiger Trenn- und Erdungsschalter, mit einem in seiner Längsachse bewegbaren Kontaktbolzen (20) pro Phase, der in einer ersten Stellung zwei Aktivteile (18, 24) miteinander verbindet und in einer zweiten Stellung mit einem feststehenden Erdungskontaktstück (42) in Verbindung gebracht ist, mit einem Antriebsmotor (48) für die Kontaktbolzen (20), der die Kontaktbolzen (20) über eine Antriebsspindel (39) betätigt, **dadurch gekennzeichnet, dass** die Bewegungslinien der Kontaktbolzen (20) aller Phasen in einer Ebene liegen, wobei die Kontaktbolzen (20) von je einer mit der Bewegungslinie fluchtenden Isolierspindel (23) antreibbar sind, dass
die Antriebsspindel (39) in der Ebene der Bewegungslinien liegt und senkrecht zu den Isolierspindeln (23) verläuft und mit diesen über je ein Umlenkgetriebe (37) gekoppelt ist, und dass das Umlenkgetriebe (37) für den Antrieb der Kontaktbolzen (20) in den Erdungskontaktstücken (42) untergebracht ist.

2. Trenn- und Erdungsschalter nach Anspruch 1, **dadurch gekennzeichnet, dass** das Umlenkgetriebe (37) ein Kegelradgetriebe ist, dessen Kegelräder (36, 38) im jeweiligen Erdungskontaktstück (42) untergebracht sind.

3. Trenn- und Erdungsschalter nach Anspruch 1 oder 2, **dadurch gekennzeichnet, dass** die Isolierspindel (23) jeweils ein Außengewinde aufweisen, das in ein Innengewinde je eines Kontaktbolzens (20) eingreift, wobei jeder Kontaktbolzen (20) an einer Drehung gehindert ist, so dass bei Drehung der Isolierspindel (23) die Kontaktbolzen (20) in die eine oder andere Richtung verschoben werden.

## Claims

1. Metal-encapsulated, gas-insulated, combined, polyphase, preferably three-phase disconnector and earthing switch, which is accommodated in a housing, with one contact bolt (20) per phase which is capable of moving in its longitudinal axis and, in a first position, connects two active parts (18, 24) to one another and, in a second position, is connected to a fixed earthing contact piece (42), with a drive motor (48) for the contact bolts (20), which drive motor actuates the contact bolts (20) via a drive spindle (39), **characterized in that** the lines of movement of the contact bolts (20) of all phases lie in one plane, wherein the contact bolts (20) can be driven by in each case one insulating spindle (23), which is aligned with the line of movement, wherein the drive spindle (39) lies in the plane of the lines of movement and runs perpendicular to the insulating spindles (23) and is coupled thereto via in each case one angle gear mechanism (37), and wherein the angle gear mechanism (37) for driving the contact bolts (20) is accommodated in the earthing contact pieces (42).

2. Switch disconnector and earthing switch according to Claim 1, **characterized in that** the angle gear mechanism (37) is a bevel gear, whose bevel wheels (36, 38) are accommodated in the respective earthing contact piece (42).

3. Switch disconnector and earthing switch according to Claim 1 or 2, **characterized in that** the insulating spindles (23) each have an outer thread, which engages in an inner thread of in each case one contact bolt (20), wherein each contact bolt (20) is impeded in terms of a rotation, with the result that, when the insulating spindles (23) rotate, the contact bolts (20) are shifted in one direction or the other.

## Revendications

1. Interrupteur de coupure et de mise à la terre combiné monté dans un boîtier, encapsulé de métal, isolé au gaz, polyphasé, de préférence triphasé, comprenant une goupille de contact (20) déplaçable suivant son axe longitudinal pour chaque phase, qui, dans une première position, relie deux parties actives (18, 24) l'une à l'autre et qui, dans une deuxième position, est amenée en liaison avec une pièce de contact de mise à la terre fixe (42), comprenant un moteur d'entraînement (48) pour les goupilles de contact (20), qui actionne les goupilles de contact (20) par le biais d'une broche d'entraînement (39), **caractérisé en ce que** les lignes de déplacement des goupilles de contact (20) de toutes les phases sont situées dans un plan, les goupilles de contact (20) pouvant être entraînées chacune par une broche d'isolation (23) en alignement avec la ligne de déplacement, **en ce que** la broche d'entraînement (39) est située dans le plan des lignes de déplacement et s'étend perpendiculairement aux broches d'isolation (23) et est accouplée à celles-ci par le biais d'un mécanisme de renvoi respectif (37) et **en ce que** le mécanisme de renvoi (37) pour l'entraînement des goupilles de contact (20) est monté dans les pièces de contact de mise à la terre (42).

2. Interrupteur de coupure et de mise à la terre selon la revendication 1, **caractérisé en ce que** le mécanisme de renvoi (37) est un engrenage à pignons coniques dont les pignons coniques (36, 38) sont montés dans la pièce de contact de mise à la terre respective (42).

3. Interrupteur de coupure et de mise à la terre selon la revendication 1 ou 2, **caractérisé en ce que** les broches d'isolation (23) présentent à chaque fois un filetage extérieur qui vient en prise dans un filetage intérieur de chaque goupille de contact (20), chaque goupille de contact (20) étant empêchée de tourner de telle sorte que lors de la rotation de la broche d'isolation (23), les goupilles de contact (20) soient déplacées dans l'une ou l'autre direction.
